(19) Europäisches Patentamt
European Patent Office
Office européen des brevets

(11) **EP 3 416 010 B1**

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(51) Int Cl.:
***G05B 19/416*** *(2006.01)*

(21) Anmeldenummer: **17175400.5**

(22) Anmeldetag: **12.06.2017**

(54) **VERFAHREN UND VORRICHTUNG ZUR BESTIMMUNG EINES BAHNZUGS EINER WARENBAHN, COMPUTERPROGRAMMPRODUKT, INDUSTRIELLE ANLAGE UND PRODUKTIONSMASCHINE**

METHOD AND DEVICE FOR DETERMINING THE TENSION IN A WEB, COMPUTER PROGRAM PRODUCT, INDUSTRIAL INSTALLATION AND PRODUCTION MACHINE

PROCÉDÉ ET DISPOSITIF DE DÉTERMINATION DE LA TENSION D'UNE BANDE DE PRODUIT, PRODUIT-PROGRAMME D'ORDINATEUR, INSTALLATION INDUSTRIELLE ET MACHINE DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.12.2018 Patentblatt 2018/51**

(73) Patentinhaber: **Siemens Aktiengesellschaft**
**80333 München (DE)**

(72) Erfinder: **Meinardus, Martin**
**90480 Nürnberg (DE)**

(56) Entgegenhaltungen:
**EP-A2- 1 790 601        EP-A2- 1 975 103**
**DE-A1-102006 061 252   DE-A1-102010 056 295**

**Beschreibung**

Die Erfindung betrifft ein Verfahren und eine Vorrichtung zur Bestimmung eines Bahnzugs einer Warenbahn. Weiter betrifft die Erfindung ein Computerprogrammprodukt. Darüber hinaus betrifft die Erfindung eine industrielle Anlage und eine Produktionsmaschine.

Bisher wurden zur Bestimmung einer Bahnspannung einer Warenbahn, insbesondere eine Zellstoff-haltige Warenbahn in einer Papiermaschine, eine Zugmessdose oder mehrere Zugmessdosen verwendet.

Zugmessdosen haben den Nachteil, dass sie störanfällig, teuer und, je nach Anwendungsgebiet, zu ungenau sind. Überdies kann bisher der Bahnzug nur an festgelegten Punkten bestimmt werden.

DE 10 2006 061 252 A1 offenbart ein Verfahren zur Regelung eines Bahnzugs bzw. einer Bahnspannung einer mit Hilfe eines Einzugwerks in eine Druckeinheit einzuziehenden Bedruckstoffbahn, wobei hierzu ein Istwert mit einem Sollwert verglichen wird, und wobei abhängig von der Abweichung zwischen dem Istwert und dem Sollwert eine Regeleinrichtung für den Bahnzug bzw. die Bahnspannung eine Stellgröße für das Einzugwerk erzeugt. Dabei wird der Istwert des Bahnzugs bzw. der Bahnspannung rechnerisch auf Basis eines Modells ermittelt.

DE 10 2010 056 295 A1 offenbart ein Verfahren zur Regelung der Bahnspannung in einem einen Tänzer aufweisenden Bahnspannungsabschnitt, der von einem mittels eines Einzelantriebs angetriebenen Zentralwickler und einer Klemmstelle begrenzt wird. Dabei wird eine Ist-Bahnspannung in dem Bahnspannungsabschnitt auf eine Soll-Bahnspannung durch Ansteuerung der Tänzerkraft des Tänzers geregelt, wobei die Ist-Bahnspannung auf Grundlage eines Antriebsmoments des Einzelantriebs und eines momentanen Durchmessers bzw. Radius einer von dem Zentralwickler bewegten Warenbahnrolle bestimmt wird.

EP 1975 103 A2 offenbart eine Vorrichtung zur Ermittlung der Bahnspannung bzw. des Bahnzugs in einer Bedruckstoffbahn, wobei die an einer Position entlang eines Transportwegs der Bedruckstoffbahn herrschende Bahnspannung bzw. der an dieser Position herrschende Bahnzug rechnerisch ermittelt wird aus der an einer anderen Position entlang des Transportwegs herrschenden Bahnspannung bzw. des an der anderen Position herrschenden Bahnzugs sowie aus Kräften, die mindestens eine angetriebene Walze und/oder mindestens eine geschleppte Walze, die entlang des Transportwegs zwischen diesen beiden Positionen angeordnet ist, in die Bedruckstoffbahn eintragen.

Es ist Aufgabe der Erfindung, den Bahnzug einer Warenbahn einfach und flexibel zu bestimmen.

Die Aufgabe wird durch ein Verfahren nach Anspruch 1 und durch ein Computerprogrammprodukt nach Anspruch 7 gelöst.

Die Aufgabe wird weiter durch eine Vorrichtung gemäß Anspruch 8 gelöst.

Darüber hinaus wird die Aufgabe durch eine industrielle Anlage gemäß Anspruch 9 sowie durch eine Produktionsmaschine nach Anspruch 10 gelöst.

Vorteilhafte Weiterbildungen und Ausgestaltungen sind Gegenstand der abhängigen Ansprüche.

Insbesondere zur Vermeidung der Zugmessdosen wird vorgeschlagen, dass die Bestimmung des Bahnzuges nicht mit Hilfe einer Zugmessdose, sondern durch eine Berechnung des Bahnzugs in der Steuereinrichtung und/oder einem Frequenzumrichter erfolgt.

Der Erfindung liegt die Erkenntnis zu Grunde, dass die Gesamtlast des Antriebs der Warenbahn in einem Frequenzumrichter oder in einer Steuereinrichtung des Antriebs bereitsteht. Darüber hinaus sind die Eigenschaften der Warenbahn, insbesondere die Breite, Dicke oder Querschnitt der Warenbahn bekannt. Zudem ist der Durchmesser der jeweiligen Umlenkrolle bekannt, mit dessen Hilfe die Bewegung und die Umlenkung der Warenbahn erfolgt.

Durch die bekannten und gemessenen Größen kann die bisher oft obligatorische Zugmessdose entfallen.

Bei dem Verfahren zur Bestimmung eines Bahnzugs einer Warenbahn wird die Warenbahn mit zumindest einem Motor über eine Umlenkrolle mit einer Bahngeschwindigkeit bewegt, wobei der Motor mit einer Drehgeschwindigkeit und einem Drehmoment die Umlenkrolle antreibt, wobei ein Frequenzumrichter das Drehmoment und die Drehgeschwindigkeit des Motors vorgibt, dadurch gekennzeichnet, dass der Bahnzug an zumindest einer Stelle der Warenbahn mit Hilfe einer Last an dem Motor, einer Reibungslast, einer Beschleunigungslast, dem Durchmesser der Umlenkrolle sowie der Breite der Warenbahn ermittelt wird.

Unter dem Bahnzug wird die Zugspannung verstanden, welche auf die Warenbahn in Bewegungsrichtung der Warenbahn wirkt.

Die Geschwindigkeit der Warenbahn entspricht der Geschwindigkeit eines festen Punktes auf der Warenbahn durch einen festen Raum. Das Drehmoment ist vorzugsweise durch die Bestimmung des Motorstroms in dem Frequenzumrichter bestimmbar. Die Drehgeschwindigkeit der Umlenkrolle ist durch einen Geber bestimmbar, der dem Motor zugeordnet ist. Mit Hilfe des Durchmessers der Umlenkrolle kann die Geschwindigkeit der Warenbahn bestimmt werden.

Durch die Bestimmung des Drehmoments und der Drehgeschwindigkeit zumindest einer (mit dem Motor angetriebenen) Umlenkrolle kann der Bahnzug der Warenbahn einfach und genau bestimmt werden. Eine Zugmessdose kann somit entfallen.

Gemäß der Erfindung wird der Bahnzug an der zumindest einen Stelle durch

$$Z = \frac{Y - Y\_f - Y\_a}{\frac{d}{b}}$$

berechnet.

Hierbei bezeichnet Z den Bahnzug, Y die Last am Antrieb, Y_f den Anteil der Last, welcher durch Reibung aufgewendet wird. Weiter bezeichnet Y_a den Anteil der Last, der für die Beschleunigung der Warenbahn eingesetzt wird. Y_f wird im Folgenden auch als Reibungslast bezeichnet und Y_a wird im Folgenden auch als Beschleunigungslast bezeichnet. Der Anteil der Last, der zur Beschleunigung der Warenbahn aufgewendet wird, ist durch einen Probelauf der Umlenkrollen ohne eine Warenbahn leicht bestimmbar.

Bei der Bestimmung der Beschleunigungslast wird die Last des Motors bei einer Beschleunigung der Warenbahn bestimmt. Gegebenenfalls kann dies einmal mit und einmal ohne Warenbahn erfolgen.

Bei der Bestimmung der Reibungslast wird für eine jeweilige Drehgeschwindigkeit die Last am Motor einmal mit Warenbahn und einmal ohne Warenbahn bestimmt und jeweils die Differenz gebildet. Die Differenz der beiden Last-Werten ist die Reibungslast. Bei der Bestimmung der Reibungslast ist die Drehgeschwindigkeit des Motors vorzugsweise jeweils konstant. Die Reibungslast wird vorteilhaft für eine Mehrzahl von jeweils konstanten Drehgeschwindigkeiten des Motors bestimmt. Diese Formel kann noch mit einem Faktor für einen Schlupf zwischen der jeweiligen Umlenkrolle und der Warenbahn erweitert werden. Weiter kann auch der Elastizitätsmodul der Warenbahn berücksichtigt werden. Dies kann durch einen empirisch bestimmten Faktor in der o. g. Formel erfolgen.

Mit der hier vorgestellten Beziehung kann in einfacher Art und Weise der Bahnzug zwischen zwei Umlenkrollen bestimmt werden.

Bei einer vorteilhaften Ausgestaltung der Erfindung liegt die Reibungslast in Form einer Kennlinie vor.

Bei der Kennlinie handelt es sich vorzugsweise um eine Vorgabe der Reibungslast in Abhängigkeit der Drehzahl. Die Kennlinie kann durch empirisch durch einen Vergleich der aufzuwendenden Last mit und ohne Warenbahn bei jeweils konstanter Drehzahl des Motors. Durch den empirischen Vergleich bei unterschiedlichen Drehzahlen wird die Kennlinie erstellt. Die Kennlinie kann auch durch eine Berechnung oder durch eine Adaption ermittelt werden. Man spricht hier insbesondere von einer online-Adaption.

Vorteilhaft kann die Kennlinie (der Reibungslast als Funktion der Drehgeschwindigkeit bzw. Drehzahl) während des Betriebes der industriellen Anlage ermittelt werden. Denkbar ist hierbei eine online-Berechnung anhand eines mathematischen Modells oder mit Hilfe einer semi-empirischen Methode.

Besonders bevorzugt wird die Reibungskennlinie ohne die Warenbahn bestimmt. Die Reibungslast entspricht der aufgewendeten (Reibungs-) Last bei jeweils konstanter Drehgeschwindigkeit/Drehzahl des jeweiligen Antriebs.

Bei einer weiteren vorteilhaften Ausgestaltung der Erfindung dient der ermittelte Bahnzug als Eingangsgröße eines Regelkreises, wobei der Regelkreis die Drehgeschwindigkeit und/oder das Drehmoment des Motors regelt.

Vorzugsweise wird der Bahnzug durch die Drehzahl des jeweiligen Motors bestimmt, der dann die jeweilige Umlenkrolle antreibt. Die jeweilige Umlenkrolle wird von der Warenbahn beaufschlagt.

Der Bahnzug kann durch einen Regelkreis geregelt werden. Der Regelkreis gibt gemäß dem ermittelten Bahnzug vorzugsweise jeweils einen Sollwert für die Drehgeschwindigkeit des jeweiligen Motors und/oder jeweils einen Sollwert für das Drehmoment des jeweiligen Motors.

Durch den Regelkreis wird somit der Bahnzug verbessert eingestellt.

Bei einer weiteren vorteilhaften Ausgestaltung der Erfindung erfolgt die Ermittlung des Bahnzuges im Frequenzumrichter.

Moderne Frequenzumrichter umfassen oft eine zugeordnete Steuereinrichtung. Darüber hinaus weist ein Frequenzumrichter optional einen Regelkreis auf. Beispielhaft für einen solchen Frequenzumrichter ist ein SINAMICS S120 der Firma Siemens AG.

Durch die Bestimmung des Bahnzugs mit Hilfe des Frequenzumrichters wird die Steuereinrichtung entlastet. Optional gibt die Steuereinrichtung lediglich einen Sollwert für den Bahnzug vor. Weiter vorteilhaft ist ein reduzierte Datentransfer bzw. Signalverkehr zwischen der Steuereinrichtung und dem Frequenzumrichter.

Bei einer weiteren vorteilhaften Ausgestaltung der Erfindung erfolgt die Regelung des Bahnzugs mit Hilfe des Regelkreises.

Vorzugsweise wird der Bahnzug als eigene Größe geregelt. Anhand des Bahnzuges können dann das Drehmoment und/oder die Drehgeschwindigkeit des jeweiligen Motors gesteuert oder geregelt werden.

Durch eine eigenständige Regelung des Bahnzugs kann dieser Wert besonders einfach eingestellt werden. Anhand des geregelten Bahnzugs kann somit die komplexe Einstellung des Drehmoments und/oder der Drehzahl des jeweiligen Motors gesteuert werden.

Bei einer weiteren vorteilhaften Ausgestaltung der Erfindung wird die Warenbahn über mehrere Umlenkrollen geführt, wobei eine Mehrzahl der Umlenkrollen jeweils mit Hilfe jeweils eines Motors in der Drehgeschwindigkeit und/oder dem Drehmoment geregelt wird, wobei dem jeweiligen Motor ein Regelkreis zugeordnet ist und der jeweilige Regelkreis zur Einstellung des Bahnzugs an mehreren Stellen der Warenbahn dient.

Geregelt wird vorzugsweise der Bahnzug der Warenbahn zwischen zwei angetriebenen oder nicht-angetriebenen Umlenkrollen.

Optional kann eine nicht-angetriebene Umlenkrolle mit einem Geber für die Drehzahl und/oder einem Sensor für das anliegende Drehmoment ausgestattet sein.

Durch die Möglichkeit, den Bahnzug an mehreren Stellen gleichzeitig zu bestimmen und zu regeln, wird durch diese Ausgestaltung gleich eine Mehrzahl von sonst notwendigen Zugmessdosen eingespart.

Vorzugsweise wird das Verfahren mit Hilfe eines Computerprogrammprodukts durchgeführt. Hierbei ist das Computerprogrammprodukt auf der Steuereinrichtung und/oder auf einem, der Steuereinrichtung zugeordneten Recheneinheit installiert und ablauffähig. Mit Hilfe des Computerprogrammproduktes wird die Steuerung oder die Regelung des Bahnzugs unterstützt oder ausgeführt. Die Einstellung des Bahnzugs der Warenbahn erfolgt anhand von Vorgaben des Computerprogrammproduktes mit Hilfe der Steuereinrichtung und/oder des jeweiligen Frequenzumrichters.

Bei der Vorrichtung zur Einstellung eines Bahnzugs einer Warenbahn weist die Vorrichtung zumindest eine Umlenkrolle, zumindest ein Motor und eine Steuereinrichtung auf, wobei dem jeweilige Motor ein Frequenzumrichter zugeordnet ist, wobei zumindest einer der Umlenkrollen jeweils ein Motor und ein Frequenzumrichter zugeordnet ist, wobei der jeweilige Motor mit Hilfe des Umrichters und/oder der Steuereinrichtung den Bahnzug der Warenbahn gemäß dem hier beschriebenen Verfahren steuert oder regelt.

Die Vorrichtung umfasst somit ein Antriebsystem und eine Steuereinrichtung, wobei eine Steuereinrichtung zur Einstellung des Bahnzugs dient. Vorzugsweise weist die Steuereinrichtung Eingänge die Last. Die Steuereinrichtung kann dem Frequenzumrichter zugeordnet sein. Somit ist die eigentliche Steuereinrichtung, welche zur Steuerung der industriellen Anlage oder der Produktionsmaschine dient, vorteilhaft entlastet.

Die Steuereinrichtung kann auch als Mikrocomputer ausgestaltet sein. Zur Ermittlung der Last können Sensoren für den Motorstrom eingesetzt werden. Der jeweilige Sensor ist vorzugsweise dem jeweiligen Frequenzumrichter zugeordnet. Weiter kann die Steuereinrichtung einen Speicher für die Reibungslast und/oder die Beschleunigungslast aufweisen. Die Reibungslast liegt vorzugsweise in Form einer Tabelle oder einer Funktion der Drehgeschwindigkeit oder der Drehzahl des jeweiligen Motors vor. Die Beschleunigungslast liegt vorzugsweise in Form einer Tabelle oder als Funktion der (zeitlichen) Änderung der Drehgeschwindigkeit oder der Drehzahl des jeweiligen Motors vor.

Die Beschleunigungslast und/oder die Reibungslast werden vorzugsweise in einem Probelauf (einmal mit und einmal ohne Warenbahn) bestimmt.

Anwendbar ist die Erfindung insbesondere dort, wo die Messung des Bahnzugs einer Warenbahn schwer möglich ist oder aus Kostengründen auf Zugmessdosen verzichtet werden sollte.

Beispielhaft für eine Produktionsmaschine wie eine Schlauchbeutelmaschine oder für eine industrielle Anlage wie eine Papiermaschine oder ein Förderband.

Im Folgenden wird die Erfindung anhand von Figuren näher beschrieben. Die Ausführungsformen der Erfindung stellen keine Einschränkung der Erfindung dar. Es zeigen

FIG 1      eine Vorrichtung gemäß dem Stand der Technik

FIG 2      eine Vorrichtung zur Bestimmung des Bahnzuges sowie

FIG 3      einen Teil einer Vorrichtung zur Bestimmung des Bahnzuges.

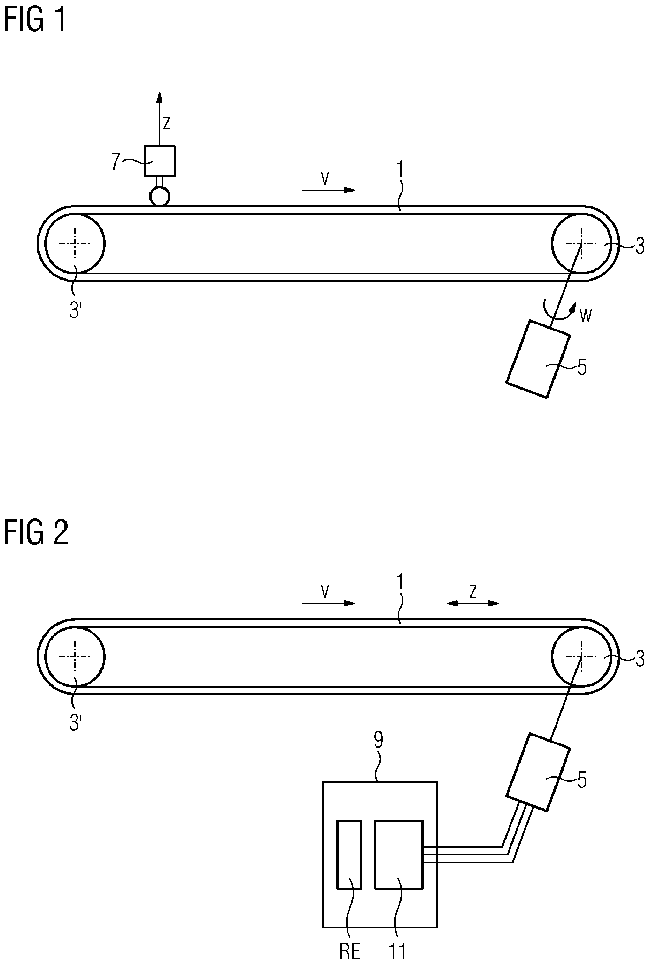

**FIG 1** zeigt eine Vorrichtung gemäß dem Stand der Technik. Eine Warenbahn 1 wird über zwei Umlenkrollen 3, 3' geführt. Hierbei ist die angetriebene Umlenkrolle 3 mit einem Motor 5 verbunden. Der Motor 5 dient zur Bewegung der Warenbahn 1 mit einer Geschwindigkeit v. Zur Bestimmung des Bahnzugs Z dient eine Zugmessdose 7. Die Zugmessdose 7 stellt die Zugspannung Z bereit. Die Darstellung der Zugmessdose 7 ist vereinfacht, da gewöhnlich eine Zugmessdose 7 den Bahnzug über einen Umlenkwinkel bestimmt, wobei der Umlenkwinkel die Position einer (ggf. angetriebenen) Rolle definiert.

**FIG 2** zeigt eine Vorrichtung zur Bestimmung des Bahnzugs Z eineer Warenbahn 1. Die Warenbahn 1 wird über eine angetriebene Umlenkrolle 3 und eine nicht angetriebene Umlenkrolle 3' geführt. Bei der Warenbahn 1 handelt es sich beispielhaft um eine Papierbahn oder um eine Schlauchbeutel-Bahn. Die Warenbahn 1 weist die Geschwindigkeit v auf. Die Warenbahn 1 wird durch einen Motor 5 bewegt. Der Motor 5 dient zur Drehbewegung der Umlenkrolle 3. Der Motor 5 wird mit Hilfe einer Steuereinrichtung 9 und einem Frequenzumrichter 11 gesteuert oder geregelt. Hierbei stellt der Frequenzumrichter 11 gemäß den Vorgaben der Steuereinrichtung 9 den Motorstrom für den Motor 5 bereit. Vorzugsweise weist die Steuereinrichtung 9 einen Regelkreis RE auf. Der Regelkreis RE dient vorzugsweise zur Regelung des Drehmoments D und/oder der Drehgeschwindigkeit w des Motors 5.

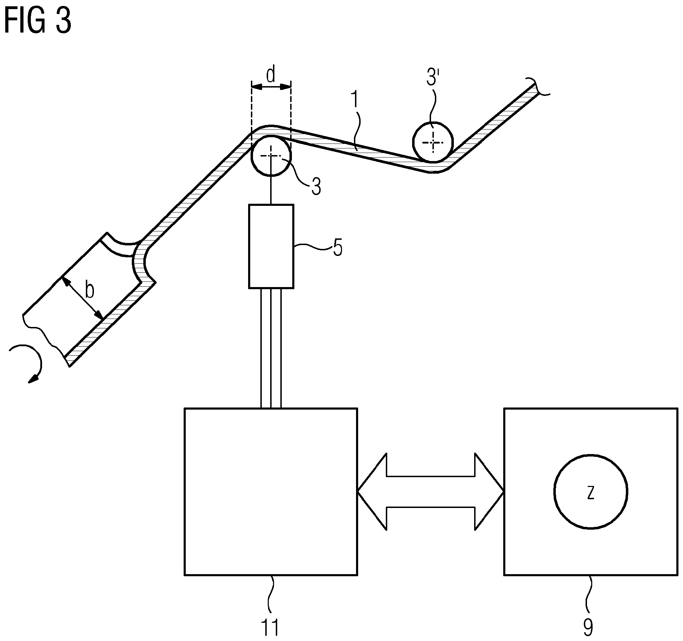

**FIG 3** zeigt einen Teil einer Vorrichtung zur Bestimmung des Bahnzuges Z einer Warenbahn 1. Die Warenbahn 1 weist eine Breite b auf. Die Warenbahn 1 wird über eine angetriebene Umlenkrolle 3 und eine nicht-angetriebene Umlenkrolle 3' geführt. Die angetriebene Umlenkrolle 3 ist mit einem Motor 5 verbunden und der Motor 5 beaufschlagt die Umlenkrolle 3 mit einem Drehmoment D. Durch den Motor 5 angetrieben, bewegt sich die Umlenkrolle 3, 3' mit der Drehgeschwindigkeit w. Die angetriebene Umlenkrolle 3 weist einen Durchmesser d auf. Der Motor 5 ist mit dem Frequenzumrichter 11 verbunden. Der Frequenzumrichter 11 steht in Wechselwirkung mit der Steuereinrichtung 9. Die Steuereinrichtung 9 dient zur Einstellung des Bahnzuges Z der Warenbahn 1. Hierfür stellt der Umrichter das Lastmoment Y (auch kurz als Last des Motors 5 bezeichnet). Der Bahnzug Z wird mit Hilfe der Steuereinrichtung 9 bestimmt. Hierzu wird vorzugsweise die vom Frequenzumrichter 11 bereitgestellte Last Y mit der Reibungslast $Y_f$ und der Beschleunigungslast $Y_a$ sowie weiterer Größen wie der Durchmesser d der Umlenkrolle 3 und der Breite der Warenbahn b zum Bahnzug Z verknüpft.

Anhand des von der Steuereinrichtung 9 bereitgestellten Bahnzug Z steuert oder regelt die Frequenzumrichter 11 die Drehgeschwindigkeit w und/oder das Drehmoment D des Motors 5. Durch den Motor 5 ist der Bahnzug Z der Warenbahn 1 regelbar.

Zusammenfassend betrifft die Erfindung ein Verfahren und eine Vorrichtung zur Bestimmung eines Bahnzugs Z einer Warenbahn 1. Durch die Bestimmung des Bahnzugs Z mit Hilfe von Bewegungsgrößen wie der Last eines Motors 5, der zum Antrieb einer Umlenkrolle 3, 3' dient, kann vorteilhaft eine Zugmessdose 7 zur Bestimmung des Bahnzugs Z der Warenbahn 1 entfallen.

**Patentansprüche**

1. Verfahren zur Bestimmung eines Bahnzugs (Z) einer Warenbahn (1), wobei die Warenbahn (1) mit zumindest einem Motor (5) über eine Umlenkrolle (3) mit einer Bahngeschwindigkeit (v) bewegt wird, wobei der Motor (5) mit einer Drehgeschwindigkeit (w) und einem Drehmoment (D) die Umlenkrolle (3) antreibt, wobei ein Frequenzumrichter (11) das Drehmoment (D) und die Drehgeschwindigkeit (w) des Motors (5) vorgibt, wobei der Bahnzug (Z) an zumindest einer Stelle der Warenbahn (1) mit Hilfe einer durch den Frequenzumrichter (11) bereitgestellten Last (Y) an dem Motor (5), einer Reibungslast (Y_f), einer Beschleunigungslast (Y_a), dem Durchmesser (d) der Umlenkrolle (3) sowie der Breite (b) der Warenbahn (1) ermittelt wird, wobei der Bahnzug (Z) an der zumindest einen Stelle durch

$$Z = \frac{\frac{Y - Y\_f - Y\_a}{d}}{b}$$

berechnet wird.

2. Verfahren nach einem der vorangehenden Ansprüche, wobei die Reibungslast (Y_f) in Form einer Kennlinie vorliegt.

3. Verfahren nach einem der vorangehenden Ansprüche, wobei der ermittelte Bahnzug (Z) als Eingangsgröße eines Regelkreises (13) dient, wobei der Regelkreis (RE) die Drehgeschwindigkeit und/oder das Drehmoment (D) des Motors (5) regelt.

4. Verfahren nach einem der vorangehenden Ansprüche, wobei die Ermittlung des Bahnzuges (Z) im Frequenzumrichter (11) erfolgt.

5. Verfahren nach Anspruch 3, wobei eine Regelung des Bahnzugs (Z) mit Hilfe des Regelkreises (RE) erfolgt.

6. Verfahren nach einem der vorangehenden Ansprüche, wobei die Warenbahn (1) über mehrere Umlenkrollen (3) geführt wird, wobei eine Mehrzahl der Umlenkrollen (3) jeweils mit Hilfe jeweils eines Motors (5) in der Drehgeschwindigkeit (w) und/oder dem Drehmoment (D) geregelt wird, wobei dem jeweiligen Motor (5) ein Regelkreis (RE) zugeordnet ist und der jeweilige Regelkreis (RE) zur Einstellung des Bahnzugs an mehreren Stellen der Warenbahn dient.

7. Computerprogrammprodukt, welches ein Computerprogramm enthält, das bei Ausführung auf einem Computer die computerausführbaren Schritte des Verfahrens nach einem der vorhergehenden Ansprüche ausführt.

8. Vorrichtung zur Einstellung eines Bahnzugs (Z) einer Warenbahn (1), aufweisend zumindest eine Umlenkrolle (3), zumindest einen Motor (5) und eine Steuereinrichtung (9), wobei dem jeweiligen Motor (5) ein Frequenzumrichter (11) zugeordnet ist, wobei zumindest einer der Umlenkrollen (3) jeweils ein Motor und ein Frequenzumrichter (11) zugeordnet ist, wobei der jeweilige Motor (5) mit Hilfe des Umrichters (11) und der Steuereinrichtung (9) den Bahnzug (Z) der Warenbahn (1) gemäß dem Verfahren nach einem der Ansprüche 1 bis 6 steuert oder regelt.

9. Industrielle Anlage, insbesondere Papiermaschine, aufweisend eine Vorrichtung nach Anspruch 8.

10. Produktionsmaschine, insbesondere Schlauchbeutelmaschine, Druckmaschine oder Folienmaschine, aufweisend eine Vorrichtung nach Anspruch 8.

**Claims**

1. Method for determining a web tension (Z) of a product web (1), wherein the product web (1) is moved by at least one motor (5) over a deflection roller (3) at a web speed (v), wherein the motor (5) drives the deflection roller (3) with a speed of rotation (w) and a torque (D), wherein a frequency converter (11) predefines the torque (D) and the speed of rotation (w) of the motor (5), wherein the web tension (Z) at at least one point of the product web (1) is determined by using a load (Y) on the motor (5) that is provided by the frequency converter (11), a frictional load (Y_f), an acceleration load (Y_a), the diameter (d) of the deflection roller (3) and the width (b) of the product web (1), wherein the web tension (Z) at the at least one point is calculated by

$$Z = \frac{\frac{Y - Y\_f - Y\_a}{d}}{b} \quad .$$

**2.** Method according to one of the preceding claims, wherein the frictional load (Y_f) is present in the form of a characteristic curve.

**3.** Method according to one of the preceding claims, wherein the web tension (Z) determined is used as an input variable to a control loop (13), wherein the control loop (RE) controls the speed of rotation and/or the torque (D) of the motor (5).

**4.** Method according to one of the preceding claims, wherein the web tension (Z) is determined in the frequency converter (11) .

**5.** Method according to Claim 3, wherein the web tension (Z) is regulated by using the control loop (RE).

**6.** Method according to one of the preceding claims, wherein the product web (1) is led over multiple deflection rollers (3), wherein the speed of rotation (w) and/or the torque (D) of a plurality of the deflection rollers (3) is respectively controlled by using a respective motor (5), wherein the respective motor (5) is assigned a control loop (RE) and the respective control loop (RE) is used to adjust the web tension at multiple points of the product web.

**7.** Computer program product which contains a computer program which, when executed on a computer, carries out the computer-executable steps of the method according to one of the preceding claims.

**8.** Device for adjusting a web tension (Z) of a product web (1), having at least one deflection roller (3), at least one motor (5) and a control device (9), wherein the respective motor (5) is assigned a frequency converter (11), wherein at least one of the deflection rollers (3) is respectively assigned a motor and a frequency converter (11), wherein the respective motor (5) controls or regulates the web tension (Z) of the product web (1) according to the method according to one of Claims 1 to 6 by using the converter (11) and the control device (9).

**9.** Industrial installation, in particular a paper machine, having a device according to Claim 8.

**10.** Production machine, in particular a tubular bag-making machine, printing machine or film machine, having a device according to Claim 8.

**Revendications**

**1.** Procédé de détermination de la tension (Z) d'une bande (1), dans lequel on déplace la bande (1) par au moins un moteur (5) sur un rouleau (3) de renvoi à une vitesse (v) de bande, le moteur (5) entraînant le rouleau (3) de renvoi à une vitesse (w) de rotation et à un couple (D), un convertisseur (11) de fréquence prescrivant le couple (D) et la vitesse (w) de rotation du moteur (5), dans lequel on détermine la tension (Z) de la bande en au moins un point de la bande (1) à l'aide d'une charge (Y) mise à disposition par le convertisseur (11) de fréquence sur le moteur (5), d'une charge (Y_f) de frottement, d'une charge (Y_a) d'accélération, du diamètre (d) du rouleau (3) de renvoi, ainsi que de la largeur (b) de la bande (1), la tension (Z) de la bande, en le au moins un point, étant calculée par

$$Z = \frac{\frac{Y - Y\_f - Y\_a}{d}}{b}$$

**2.** Procédé suivant l'une des revendications précédentes, dans lequel la charge (Y_f) de frottement se présente sous la forme d'une courbe caractéristique.

**3.** Procédé suivant l'une des revendications précédentes, dans lequel la tension (Z) de la bande, qui est déterminée, sert de grandeur d'entrée à un circuit (13) de réglage, le circuit (RE) de réglage réglant la vitesse de rotation et/ou le couple (D) du moteur (5).

**4.** Procédé suivant l'une des revendications précédentes, dans lequel la détermination de la tension (Z) de la bande a lieu dans le convertisseur (11) de fréquence.

**5.** Procédé suivant la revendication 3, dans lequel un réglage de la tension (Z) de la bande s'effectue à l'aide du circuit (RE) de réglage.

**6.** Procédé suivant l'une des revendications précédentes, dans lequel on fait passer la bande (1) sur plusieurs rouleaux (3) de renvoi, on règle la vitesse (w) de rotation et/ou le couple (D) d'une pluralité de rouleaux (3) de renvoi, respectivement, à l'aide d'un moteur (5), un circuit (RE) de réglage étant associé au moteur (5) respectif et le circuit (RE) de réglage respectif servant à régler la tension de la bande en plusieurs points de la bande.

**7.** Produit de programme d'ordinateur, qui contient un programme d'ordinateur, qui, lorsqu'il est réalisé sur un ordinateur, effectue les stades pouvant être effectués par un ordinateur du procédé suivant l'une des revendications précédentes.

**8.** Système de réglage de la tension (Z) d'une bande (1), comportant au moins un rouleau (3) de renvoi, au moins un moteur (5) et un dispositif (9) de commande, dans lequel au moteur (5) respectif est associé un convertisseur (11) de fréquence, dans lequel, respectivement, un moteur et un convertisseur (11) de fréquence est associé à au moins l'un des rouleaux (3) de renvoi, dans lequel le moteur (5) respectif commande ou règle, à l'aide du convertisseur (11) et du dispositif (9) de commande, la tension (Z) de la bande (1) selon le procédé suivant l'une des revendications 1 à 6.

**9.** Installation industrielle, notamment machine à papier, ayant un système suivant la revendication 8.

**10.** Machine de production, notamment machine à former et à remplir des sachets, machine à imprimer ou machine pour film, ayant un système suivant la revendication 8.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006061252 A1
- DE 102010056295 A1
- EP 1975103 A2